# EUROPÄISCHE PATENTSCHRIFT

(11) **EP 2 218 596 B1**
(45) Veröffentlichungstag und Bekanntmachung des Hinweises auf die Patenterteilung: **30.05.2012**
(21) Anmeldenummer: 09290112.3
(22) Anmeldetag: 17.02.2009
(51) Int. Cl.: B60H 1/00

(54) **Fahrzeug-Klimaanlage mit Kühlanordnung für ein Handschuhfach**
Vehicle air conditioner with cooling arrangement for a glove box
Climatisation de véhicule avec agencement de refroidissement pour une boîte à gants

(43) Veröffentlichungstag der Anmeldung: 18.08.2010
(73) Patentinhaber: Behr France Rouffach SAS, 68250 Rouffach (FR)
(72) Erfinder: Fuentes, Nicolas, 68230 Wihr au Val (FR); Lenotte, Vincent, 68124 Logelbach (FR)
(74) Vertreter: Grauel, Andreas

(56) Entgegenhaltungen:
- EP-A- 1 514 708
- WO-A-2006/061956
- US-A1- 2008 148 752

## Beschreibung

Die Erfindung betrifft eine Fahrzeug-Klimaanlage mit einer Kühlanordnung.

Aus der DE 103 29 438 A1 ist ein Fahrzeug mit einem temperierten Ablagefach bekannt. Hierbei wird von der Klimaanlage kommende, temperierte und einem Ausströmer zuzuführende Luft vom entsprechenden Luftkanal abgezweigt und dem Handschuhfach zugeführt, um dasselbe zu temperieren.

Die DE 37 39 151 A1 offenbart ein Fahrzeug mit einer Klimaanlage, wobei im Handschuhfach eine Kühlbox angeordnet ist, welche über eine Kaftluftleitung mit dem Klimagerät der Klimaanlage verbunden ist. Dabei ist eine Anschluss am Gehäuse der Klimaanlage vorgesehen.

Die Nutzung eines Tragrohres als Luftführungskanal ist beispielsweise aus der DE 199 33 531 A1 bekannt.

Ebenfalls ist bekannt, dass Querträger in Fahrzeugen als Luftkanäle zu den Seitendüsen dienen können, wobei die Luftkanäle ausgehend von Öffnungen in einem Gehäuse einer Klimaanlage die Luft zu den Seiten- und/oder Mitteldüsen führen. Für die Einleitung der von der Klimaanlage kommenden Luft in den Querträger sind vom Gehäuse der Klimaanlage aus verlaufende, überleitende Luftkanäle vorgesehen, wie auch zur Ausleitung der Luft aus dem Querträger ausleitende Luftkanäle zu den Düsen vorgesehen sind. Je nach Länge der überleitenden Luftkanäle können dieselben gegebenenfalls auch einstückig mit dem Gehäuse oder den Düsen ausgebildet sein.

WO 2006/061956 A offenbart eine Fahrzeugklimaanlage, bei der eine Luftverteilklappe an einem Querträger, also einem Hohlprofil, anliegt, das mit einer Öffnung zur Aufnahme von konditionierter Luft versehen ist und diese in den Fußraum leitet.

Ausgehend von diesem Stand der Technik, ist es die Aufgabe der vorliegenden Erfindung, eine Fahrzeugklimaanlage mit verbesserter Kühlanordnung bereitzustellen.

Diese Aufgabe wird erfingdungsgemäß durch eine Fahrzeugklimaanlage mit den Merkmalen des Anspruchs 1 gelöst. Vorteilhafte Ausgestaltungen sind Gegenstand der Unteransprüche.

Erfindungsgemäß ist eine Fahrzeug-Klimaanlage vorgesehen, aufweisend ein Gehäuse, einen Verdampfer, welcher im Gehäuse angeordnet ist, Temperaturklappen zum Verteilen der vom Verdampfer kommenden Luft auf einen Heizkanal durch einen Heizer und einen Kaltluftbypass vorbei am Heizer, wobei die Temperaturklappen in der Kaltstellung an einem im Gehäuse senkrecht zum Luftstrom angeordneten Hohlprofil anliegen, und im Hohlprofil auf der Luftanströmseite mindestens eine Öffnung ausgebildet ist, über welche vom Verdampfer kommende, kalte Luft in das Innere des Hohlprofils eintreten kann. Dies ermöglicht eine gezielte Ausleitung der kalten Luft, wobei auf geschickte Weise die hierfür erforderlichen Einbauten, nämlich das Hohlprofil, als Anlageflächen für die Temperaturklappen dienen können.

Bevorzugt gelangt die Kaltluft aus dem Inneren des Hohlprofils über mindestens einen Durchbruch in einer der Seitenwände des Gehäuses in einen weiterführenden Luftkanal, welcher zum Handschuhfach und/oder einer Kühlbox im Fahrzeuginnenraum führt.

Besonders bevorzugt weist das Hohlprofil nur auf einer Seite eine Öffnung auf. Bevorzugt ist das Hohlprofil derart ausgebildet, dass es sowohl für linksals auch rechtsgelenkte Fahrzeuge verwendet werden kann. Hierfür weist das Hohlprofil insbesondere bevorzugt auf der anderen Seite, spiegelbildlich zur Mittelebene der Klimaanlage angeordnet, eine Sollbruchstelle für ein Herausbrechen einer Öffnung auf, d.h, ein Hohlprofil kann - je nach Herausbrechen der Öffnung - sowohl für links- als auch rechtsgelenkte Fahrzeuge verwendet werden.

Das Hohlprofil weist bevorzugt luftanströmseitig Luftleitstrukturen auf, welche ein gezieltes Einleiten der anströmenden Luft in die Öffnung(en) des Hohlprofils ermöglichen. Dabei können die Luftleitstrukturen durch sich trichterartig öffnende Rippen gebildet sein, welche gleichzeitig Anlageflächen für die Temperaturklappen bilden. Diese Rippen können aus einem elastischen Material gebildet sein, so dass bei guter Dichtfunktion Anschlaggeräusche der Klappen vermieden werden können.

Insbesondere bevorzugt ist das Hohlprofil als Stranggussteil ausgebildet und erstreckt sich in gerader Richtung von einer Seitenwand des Gehäuses zur gegenüberliegenden Seitenwand des Gehäuses.

Gemäß einer bevorzugten Ausführungsform weist das Hohlprofil eine rechteckförmiges Profil auf.

Beim Hohlprofil kann es sich natürlich auch um ein offenes Hohlprofil handeln, welches beispielsweise eine C-förmige Gestalt hat In diesem Fall dient entspricht die offene Seite der Öffnung, weiche im Falle eines geschlossenen Hohlprofils auf einer Seite (Luftanströmseite) desselben vorgesehen ist. Wesentlich ist hierbei die Luftleitfunktion in Richtung des oder der Durchbrüche in den Seitenwänden des Gehäuses.

Im Folgenden wird die Erfindung anhand eines Ausführungsbeispiels unter Bezugnahme auf die beiliegende Zeichnung näher erläutert. Hierbei zeigen:

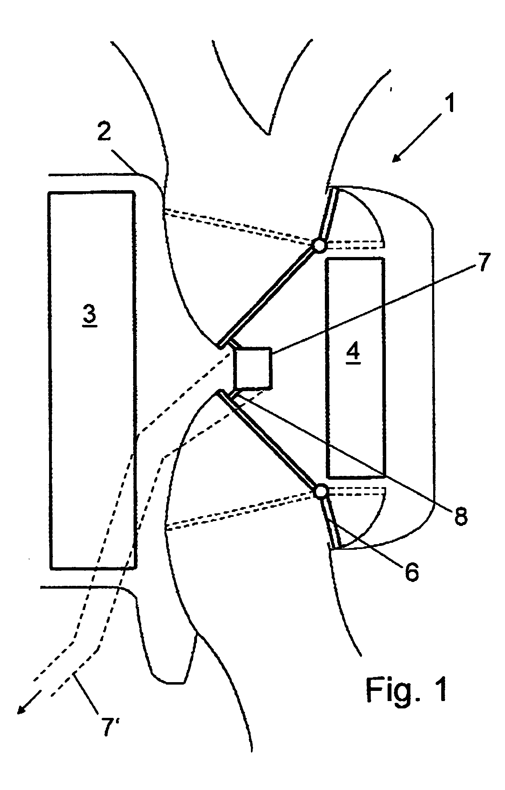

- Fig. 1: einen Schnitt entlang der Mittellängsebene einer Kühlanordnung gemäß dem Ausführungsbeispiel,

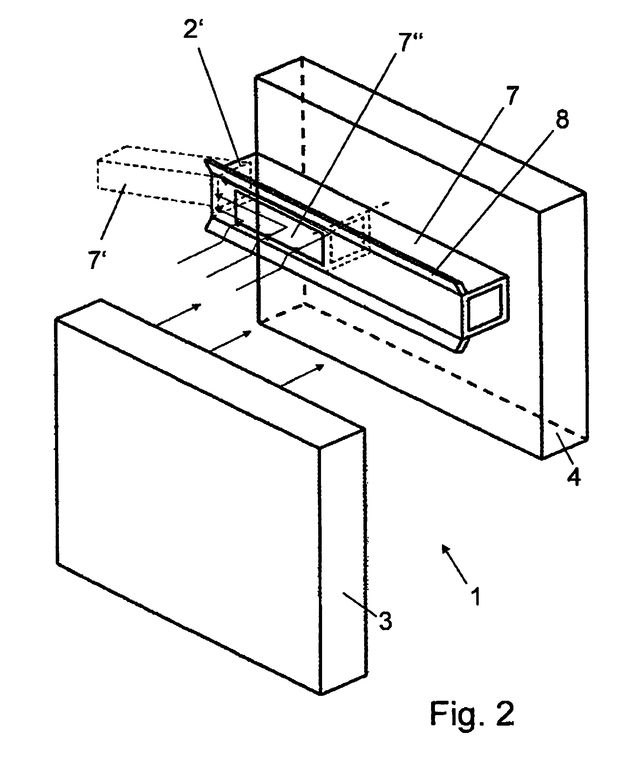

- Fig. 2: eine schematische, perspektivische Ansicht der Kühlanordnung von Fig. 1, und

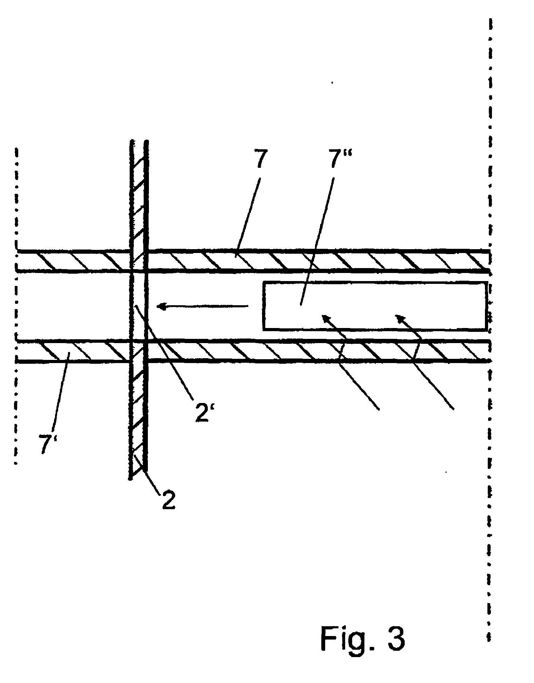

- Fig. 3: eine schematische Schnittdarstellung durch den die Kaltluft aus- leitenden Bereich der Klimaanlage.

Eine in einem Fahrzeug angeordnete Klimaanlage 1 weist einen in einem Gehäuse 2 angeordneten Verdampfer 3 und Heizer 4 auf, wobei zum Heizer 4 ein Kaltluftbypass angeordnet ist. Die Verteilung der vom Verdampfer 3 kommenden, kalten Luft auf den Heizer 4 und Kakluftbypass (vorliegend in Gestalt einer direkten Ausleitung) erfolgt mittels zweier als asymmetrisch zweiflügelige Klappen ausgebildete Temperaturklappen 6.

Im Bereich vor dem Heizer 4 ist vorliegend ein in gerader Richtung quer durch das Gehäuse 2 verlaufender Luftkanal 7 angeordnet, welcher durch ein Hohlprofil mit annähernd quadratischem Querschnitt gebildet ist. Das Hohlprofil endet jeweils an den Seitenwänden des Gehäuses 2, wobei auf einer Seite im entsprechenden Bereich ein Durchbruch 2' in der Seitenwand vorgesehen ist. Das Hohlprofil dient zum einen als ein Endanschlag für die beiden Temperaturklappen 6, wobei dieselben im Betriebszustand "maximales Kühlen" an sich trichterartig entgegen der Luftströmungsichtung erstreckenden Rippen 8 anliegen. Zum anderen dient das Hohlprofil der Ausleitung von Kaltluft aus dem Inneren des Gehäuses 2 in Richtung eines außerhalb des Gehäuse 2 angeordneten, zu kühlenden Bereichs, vorliegend eines Handschuhfachs (nicht dargestellt), wofür der Luftkanal 7 über den Durchbruch 2' des Gehäuses 2 in Verbindung mit einem weiterführenden Luftkanal 7' außerhalb des Gehäuses 2 steht, der zum kühlenden Bereich führt. Damit die vom Verdampfer 3 kommende, kalte Luft in den Luftkanal 7 gelangen kann, ist im Bereich zwischen den beiden Rippen 8 luftanströmseitig eine im Wesentlichen rechteckförmige Öffnung 7" ausgebildet, welche sich vorliegend nur über einen Teil der Länge des Hohlprofils im mittleren Bereich, ausschließlich auf der Seite des Durchbruchs 2' erstreckt.

Durch diese Ausgestaltung wird ein Teil der vom Verdampfer 3 kommenden Luft durch die Öffnung 7" und unterstützt durch die Rippen 8 direkt in den Luftkanal 7 des Hohlprofils eingeleitet, wo sie um 90° umgelenkt und innerhalb des Hohlprofils in Richtung des Durchbruchs 2' in der Seitenwand des Gehäuses 2 geleitet wird, von wo aus sie in den weiterführenden Luftkanal 7' außerhalb des Gehäuses 2 und zum Handschuhfach gelangt.

Obwohl vorstehend nicht beschrieben, können natürlich auch auf beiden Seiten in den Seitenwänden Durchbrüche mit anschließenden weiterführenden Luftkanälen vorgesehen sein, so dass nicht nur auf der Beifahrerseite ein Handschuhfach sondern auch ein weiterer Bereich, bspw. im Kofferraum angeordnet, gekühlt werden kann.

Die Ausgestaltung des Bereichs ab dem Gehäuse 2 kann beispielsweise entsprechend der DE 37 39 151 A1 erfolgen, d.h. an die Öffnung im Gehäuse 2, an welche von innen her der Luftkanal 7 anliegt, kann der außen angeordnete Luftkanal 7' angeschlossen sein und zu einem Handschuhfach oder einem anderen, zu kühlenden Bereich, geführt sein.

### Bezugszeichenliste

- 1: Klimaanlage
- 2: Gehäuse
- 2': Durchbruch
- 3: Verdampfer
- 4: Heizer
- 6: Temperaturklappe
- 7: Luftkanal
- 7': Öffnung
- 7": Luftkanal (außerhalb Gehäuse)
- 8: Rippe

## Patentansprüche

1. Fahrzeug-Klimaanlage mit einer Kühlanordnung zum Ausleiten von Kaltluft aus dem Innern eines Gehäuses der Klimaanlage in Richtung auf einen außerhalb des Gehäuses der Klimaanlage angeordneten zu kühlenden Bereich, aufweisend ein Gehäuse (2), einen Verdampfer (3), welcher im Gehäuse (2) angeordnet ist, Temperaturklappen (6) zum Verteilen der vom Verdampfer (3) kommenden Luft auf einen Heizkanal durch einen Heizer (4) und einen Kaltluftbypass vorbei am Heizer (4), wobei die Temperaturklappen (6) in der Kaltstellung an einem im Gehäuse (2) senkrecht zum Luftstrom angeordneten Hohlprofil anliegen, wobei im Hohlprofil auf der Luftanströmseite mindestens eine Öffnung (7") ausgebildet ist. über welche vom Verdampfer (3) kommende, kalte Luft in das Innere des Hohlprofils eintreten kann.

2. Fahrzeug-Klimaanlage mit einer Kühlanordnung nach Anspruch 1, **dadurch gekennzeichnet, dass** die Kaltluft aus dem Inneren des Hohlprofils über mindestens einen Durchbruch (2') in einer der Seitenwände des Gehäuses (2) in einen weiterführenden Luftkanal (7') gelangen kann.

3. Fahrzeug-Klimaanlage mit einer Kühlanordnung nach Anspruch 2, **dadurch gekennzeichnet, dass** der weiterführende Luftkanal (7') im montierten Zustand zum Handschuhfach und/oder einer Kühlbox im Fahrzeuginnenraum führt.

4. Fahrzeug-Klimaanlage mit einer Kühlanordnung nach einem der vorhergehenden Ansprüche, **dadurch gekennzeichnet, dass** am Hohlprofil Anlageflächen ausgebildet sind, an welchen die Temperaturklappen (6) mit ihren Endbereichen anliegen können.

5. Fahrzeug-Klimaanlage mit einer Kühlanordnung nach einem der vorhergehenden Ansprüche, **dadurch gekennzeichnet, dass** das Hohlprofil in Längsrichtung betrachtet, nur in einer Hälfte eine Öffnung (7") aufweist.

6. Fahrzeug-Klimaanlage mit einer Kühlanordnung nach Anspruch 5, **dadurch gekennzeichnet, dass** das Hohlprofil auf der anderen Seite, spiegelbildlich zur Mittelebene der Klimaanlage angeordnet, eine Sollbruchstelle für ein Herausbrechen einer Öffnung aufweist,

7. Fahrzeug-Klimaanlage mit einer Kühlanordnung nach einem der vorhergehenden Ansprüche, **dadurch gekennzeichnet, dass** im Gehäuse (2) nur auf eines, an das Hohlprofil angrenzenden Seitenwand, ein Durchbruch (2') für den Anschluß eines weiterführenden Luftkanals (7') ausgebildet ist.

8. Fahrzeug-Klimaanlage mit einer Kühlanordnung nach einem der vorhergehenden Ansprüche, **dadurch** gekennzeichet, dass im Gehäuse (2) auf mindestens einer, an das Hohlprofil angrenzenden Seitenwand, eine Sollbruchstelle für einen Durchbruch (2') für den Anschluss eines weiterführenden Luftkanals (7') ausgebildet ist.

9. Fahrzeug-Klimaanlage mit einer Kühlanordnung nach einem der vorhergehenden Ansprüche, **dadurch gekennzeichnet, dass** das Hohlprofil tuftanströmseitig Luftleitstrukturen aufweist.

10. Fahrzeug-Klimaanlage mit einer Kühlanordnung nach Anspruch 4 und 9, **dadurch gekennzeichnet, dass** die Luftleitstrukturen durch sich trichterartig öffnende Rippen (8) gebildet sind, welche gleichzeitig Anlageflächen für die Temperaturklappen (6) bilden.

11. Fahrzeug-Klimaanlage mit einer Kühlanordnung nach einem der vorhergehenden Ansprüche, **dadurch gekennzeichnet, dass** das Hohlprofil durch ein Kunststoffteil gebildet ist.

12. Fahrzeug-Klimaanlage mit einer Kühlanordnung nach einem der vorhergehenden Ansprüche, **dadurch gekennzeichnet, dass** das Hohlprofil sich in gerader Richtung von einer Seitenwand des Gehäuses (2) zur gegenüberliegenden Seitenwand des Gehäuses (2) erstreckt.

## Claims

1. A vehicle air conditioning system having a cooling assembly for diverting cold air from the interior of a housing of the air conditioning system toward an area to be cooled, located outside of the housing of the air conditioning system, comprising a housing (2), an evaporator (3), which is arranged inside the housing (2), temperature valves (6) for distributing the air coming from the evaporator (3) to a heating duct through a heater (4) and to a cold air bypass past the heater (4), wherein in the cold setting, the temperature valves (6) rest against a hollow profile arranged in the housing (2) perpendicular to the air flow, wherein at least one opening (7") is formed in the hollow profile on the air distribution side, through which cold air coming from the evaporator (3) is able to enter into the interior of the hollow profile.

2. The vehicle air conditioning system having a cooling assemble according to claim 1, **characterized in that** the cold air is able to pass out of the interior of the hollow profile, via at least one opening (2') in one of the side walls of the housing (2), to a secondary air duct (7').

3. The vehicle air conditioning system having a cooling assembly according to claim 2, **characterized in that** when installed, the secondary air duct (7') leads to the glove comportment and/or to a cooler inside the vehicle.

4. The vehicle air conditioning system having a cooling assembly according to any one of the preceding claims, **characterized in that** contact surfaces are formed on the hollow profile, against which the end regions of the temperature valves (6) can rest.

5. The vehicle air conditioning system having a cooling assembly according to any one of the preceding claims, **characterized in that** the hollow profile, viewed in the longitudinal direction, has an opining (7") over only one half.

6. The vehicle air conditioning system having a cooling assembly according to claim 5, **characterized in that** on the other side, arranges as a mirror image at the center plane of the air conditioning system, the hollow profile has a predetermined breaking point for breaking out an opening.

7. The vehicle air conditioning system having a cooling assembly according to any one of the preceding claims, **characterized in that** in the housing (2), on only one side wall that borders the hollow profile, an opening (2') is formed for attachment of a secondary air duct (7').

8. The vehicle air conditioning system having a cooling assembly according to many one of the preceding claims, **characterized in that** in the housing (2), on at least one side well that borders the hollow profile, an opening (2') is formed for attachment of a secondary air duct (7').

9. The vehicle air conditioning system having a cooling assembly according to many one of the preceding claims, **characterized in that** the hollow profile has air guiding structures on the air distribution side.

10. The vehicle air conditioning system having a cooling assembly according to claims 4 and 9, **characterized in that** the air guiding structures are formed by ribs (8) that open in the shape of a funnel, which at the same time form contact surfaces for the temperature valves (6).

11. The vehicle air conditioning system having a cooling assembly according to any one of the preceding claims, **characterized in that** the hollow profile is formed by a plastic component.

12. The vehicle air conditioning system having a cooling assembly according to any one of the preceding claims, **characterized in that** the hollow profile extends in a straight direction from one side wall of the housing (2) to the opposite side wall of the housing (2).

## Revendications

1. Système de climatisation d'un véhicule, comprenant un dispositif de refroidissement servant à diriger de l'air froid sortant de l'intérieur d'un carter du système de climatisation, en direction d'une zone à refroidir disposée à l'extérieur du carter du système de climatisation présentant un carter (2), un évaporateur (3) qui est disposé dans le carter (2), des volets de température (6) servant à la répartition de l'air provenant de l'évaporateur (3), à un conduit de chauffage traversant un dispositif de chauffage (4), et présentant une dérivation d'air froid passant devant le dispositif de chauffage (4), où les volets de température (6), sur la position froid, sont en appui sur un profilé creux disposé, dans le carter (2), perpendiculairement au flux d'air, où au moins une ouverture (7") est configurée, dans le profilé creux, sur le côté d'arrivée d'air, ouverture par laquelle de l'air froid provenant de l'évaporateur (3) peut entrer à l'intérieur du profilé creux.

2. Système de climatisation d'un véhicule automobile, comprenant un dispositif de refroidissement selon la revendication 1, **caractérisé en ce que** l'air froid provenant de l'intérieur du profilé creux peut passer dans un conduit d'air (7') faisant suite en aval, par au moins un passage (2') situé dans l'une des parois latérales du carter (2).

3. Système de climatisation d'un véhicule, comprenant un dispositif de refroidissement selon la revendication 2, **caractérisé en ce que** le conduit d'air (7') faisant suite en aval, une fois monté, va jusqu'à la boite à gants et / ou une boîte de refroidissement placée dans l'habitacle du véhicule.

4. Système de climatisation d'un véhicule, comprenant un dispositif de refroidissement selon l'une quelconque des revendications précédentes, **caractérisé en ce que** des surfaces d'appui sont configurées sur le profilé creux, surfaces d'appui sur lesquelles les volets de température (6) peuvent s'appuyer par leurs zones d'extrémité.

5. Système de climatisation d'un véhicule, comprenant un dispositif de refroidissement selon l'une quelconque des revendications précédentes, **caractérisé en ce que** le profilé creux, vu dans le sens de la longueur, présente une ouverture (7") s'étendant seulement sur une moitié de cette longueur.

6. Système de climatisation d'un véhicule, comprenant un dispositif de refroidissement selon la revendication 5, **caractérisé en ce que** le profilé creux présente un point prévu pour une rupture d'une ouverture, ce point étant disposé de l'autre côté, de façon symétrique par rapport au plan médian du système de climatisation.

7. Système de climatisation d'un véhicule, comprenant un dispositif de refroidissement selon l'une quelconque des revendications précédentes, **caractérisé en ce qu'**un passage (2') prévu pour le raccordement d'un conduit d'air (7') faisant suite en aval est configuré, dans le carter (2), seulement sur une paroi latérale contiguë au profilé creux.

8. Système de climatisation d'un véhicule, comprenant un dispositif de refroidissement selon l'une quelconque des revendications précédentes, **caractérisé en ce qu'**un point destiné à la rupture, pour un passage (2') prévu pour le raccordement d'un conduit d'air (7') faisant suite en aval, est configuré, dans le carter (2), sur au moins une paroi latérale contiguë au profilé creux.

9. Système de climatisation d'un véhicule, comprenant un dispositif de refroidissement selon l'une quelconque des revendications précédentes, **caractérisé en ce que** le profilé creux présente, côté arrivés d'air, des structures de déflexion d'air.

10. Système de climatisation d'un véhicule, comprenant un dispositif de refroidissement selon les revendications 4 et 9, **caractérisé en ce que** les structures de déflexion d'air sont formées par des ailettes (8) s'ouvrant en forme d'entonnoir, lesquelles ailettes forment en même temps des surfaces d'appui pour les volets de température (6).

11. Système de climatisation d'un véhicule, comprenant un dispositif de refroidissement selon l'une quelconque des revendications précédentes, **caractérisé en ce que** le profilé creux est formé par une pièce en matière plastique.

12. Système de climatisation d'un véhicule, comprenant un dispositif de refroidissement selon l'une quelconque des revendications précédentes, **caractérisé en ce que** le profilé creux s'étend suivant une direction rectiligne, depuis une paroi latérale du carter (2) jusqu'à la paroi latérale opposée du carter (2).
